# EUROPEAN PATENT SPECIFICATION

(11) **EP 1 007 407 B1**
(45) Date of publication and mention of the grant of the patent: **07.11.2001**
(21) Application number: 98941900.7
(22) Date of filing: 28.08.1998
(51) Int. Cl.: B64F 1/36

(54) **APRON FOR PARKING AND DEALING WITH AIRCRAFT**
LANDUNGSSTRUKTUR ZUM PARKEN UND VERSORGEN VON LUFTFAHRZEUGEN
AIRE DE STATIONNEMENT POUR LE STATIONNEMENT ET LA PRISE EN CHARGE D'AERONEFS

(30) Priority: 28.08.1997 NL 1006876
(43) Date of publication of application: 14.06.2000
(73) Proprietor: N.V. Luchthaven Schiphol, 1118 ZG Schiphol (NL)
(72) Inventor: KOELEMEIJER, Ewaldus, Bernardus, Maria, NL-1696 CB Oosterblokker (NL)
(74) Representative: Jorritsma, Ruurd
(86) International application number: NL9800485
(87) International publication number: WO9911520

(56) References cited:
- EP-A- 0 065 056
- WO-A-97/13686
- CH-A- 636 566
- DE-A- 3 743 393
- GB-A- 2 231 073
- US-A- 3 226 063
- US-A- 3 626 149

## Description

The invention relates to an apron for parking and dealing with aircraft, comprising:
a hardened support layer which is arranged on the ground and is reinforced in such a manner that the dynamic and static loads which occur when aircraft, vehicles and tools travel across the apron and are standing on the apron are transmitted to the ground.

Now that air travel is becoming ever more intensive, problems are arising with dealing with aircraft which are parked on the aprons of airports. Ever more vehicles and people are present on the aprons, a fact which entails high costs and may lead to unsafe situations. Airlines are demanding that aircraft be dealt with ever more quickly, in order to achieve a shorter turn-around time. Furthermore, the airline fleet composition is changing more often, so that the layout of the aprons and the way in which aircraft are dealt with has to be changed more and more. Finally, airlines always want to pay less for having their aircraft dealt with.

In view of the above, the most important object of the invention is to design an apron of the type indicated in the preamble in such a way that aircraft can be dealt with at lower cost, that the number of vehicles on the apron is reduced and that transport paths do not intersect one another.

According to the invention, the apron of the type mentioned in the preamble is to this end characterized in that an additional covering layer is arranged on the said support layer, and in that conduits and/or channels and/or tunnels and/or pits are arranged in the said covering layer, within the thickness thereof, in order to supply fuel and/or electric current and/or drinking water and/or compressed air and/or preconditioned air or oxygen to a parked aircraft and/or to discharge rainwater and/or liquid or solid waste (leaked fuel, de-icing liquid, toilet waste).

The intention ultimately is for supply and discharge systems incorporated in the covering layer to communicate with pits or a pontoon and to be able to be connected to an aircraft in a completely automated manner. The invention provides this possibility. Few people are involved in dealing with the aircraft and vehicles are only required in order to bring up and remove containers or other goods. In addition, safety on the aprons will be improved and the turn-around times for the aircraft will be shortened.

With regard to the thickness which is to be selected for the covering layer, it is necessary to take into account the loads which occur, the length of spans (possible bridging of pipes, cables and conduits or the like), the gradient for drainage, dimensions of facilities which are to be arranged in the covering layer and the effect of the covering layer on headrooms.

It should be noted that WO 97/13686 has disclosed an apron for parking and dealing with aircraft, a culvert for accommodating pipes and conduits for electric current, liquids and gases being arranged in the said apron and flexible connecting means for connecting the said pipe and conduits to connections on a parked aircraft being mounted at desired locations. The culvert is also suitable for allowing personnel to pass through it and may be assembled from components having a length of, for example, four metres. The roof of the culvert lies in the same plane as the ground level and is provided with openings which can be closed off by a cover. There is no mention of a separate support layer and a covering layer which is arranged thereon and within the thickness of which the abovementioned facilities are arranged.

The various conduits for electricity, compressed air, preconditioned air, drinking water, waste water, fuel and the like may each be connected to separate pits which are at an optimum position with respect to the aircraft to be dealt with. If the said pits were to require a pit of such a depth that they would project into the reinforced support layer, it would be necessary to select a different solution. By way of example, the pit could be tilted through 90° or the pit could be moved to a different location which is less critical with regard to the strength, or else the pit would have to be replaced by a different facility.

Instead of connecting the various conduits to separate pits, it is also possible to connect the various conduits to a common central pontoon.

The following may also be incorporated in the covering layer: foldable platforms for loading containers, cabin services and catering products, telescopically extendable pylons, pits containing a fuel-feed robot, recesses containing conveyor belts for supplying and removing loose baggage, etc. Underfloor heating elements may be incorporated in the transition between support layer and covering layer in order to thaw ice and snow.

Depending on the level of automation and mechanization, it will be possible to deal with aircraft more quickly and more reliably and to deal with more planes per apron. It will be possible to reduce the number of vehicles present on the apron considerably. As a result of automation, it is possible, when dealing with aircraft, to efficiently carry out various functions and activities at the same time, such as: connecting the electricity, refuelling, draining waste water, supplying drinking water, supplying preconditioned air or oxygen, inspecting the aircraft, etc.

The invention will now be explained in more detail with reference to the figures which illustrate an exemplary embodiment and in which:

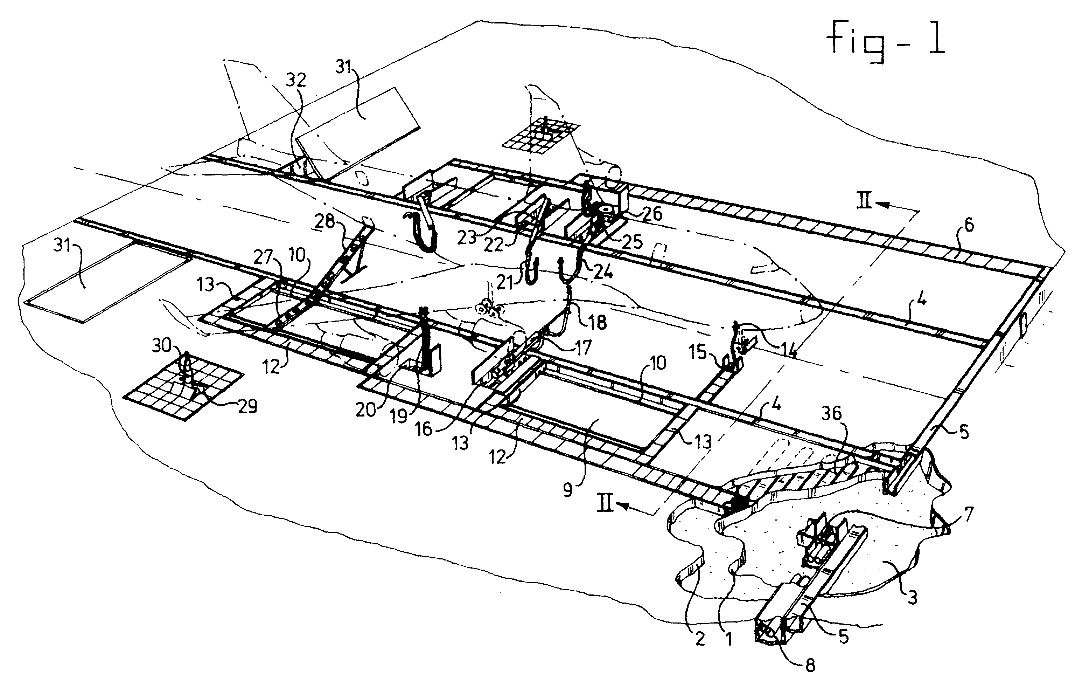

Figure 1 shows a perspective view of the design of an apron, in accordance with the invention, with certain parts imagined to be cut away.

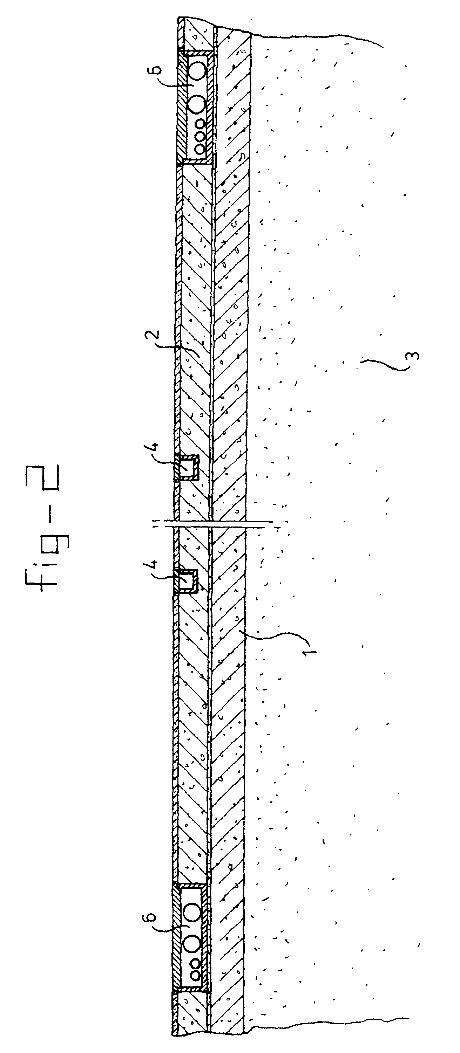

Figure 2 shows a cross-section on line II-II in Figure 1.
Figure 3 shows an enlarged section of the perspective view shown in Figure I with additional facilities.
Figures 4, 5 and 6 show cross-sections through three designs of an apron to which the invention can be applied.

The apron illustrated differs from conventional aprons by the fact that an additional covering layer 2 is arranged on top of the conventional support layer 1. The support layer 1 is situated directly on the ground and usually consists of concrete which is strengthened, for example, by a reinforcement, primarily at those locations where an aircraft which is parked or travelling across the apron exerts pressure. The covering layer 2 may be applied to an existing support layer 1 or, in the case of a completely new apron, the two layers may be applied in succession.

In the covering layer 2, within the thickness thereof, facilities are arranged which may be related, inter alia, to the supply of kerosene, the connection of electric current, the supply of drinking water, compressed air and preconditioned air or oxygen for the air-conditioning system. Furthermore, it is possible to arrange facilities which are used for draining drinking water, waste liquid, leaked fuel, de-icing liquid, toilet waste, etc.

The figures show relatively shallow longitudinal channels 4 for drainage and removing environmentally hazardous substances. These channels 4 open out into transverse channels 5 which are connected, for example, to a purification installation.

Also illustrated are wide longitudinal channels 6 in which, by way of example, electric lines, water pipes, fuel-feed pipes, sewage discharge pipes and suction lines for vacuum cleaners are positioned. The two longitudinal channels 6 open out at connecting pieces into a pit 7, which connecting pieces are in turn connected to main conduits in a transverse channel 8 which, by way of example, runs parallel to the main building of the airport. The pits 7 can be closed off by means of hinged covers. The height of the channels 6 is equal to or less than the thickness of the covering layer 2, so that the support layer does not have to be damaged. Both the channels 4 and the channels 6 are covered by plates.

Two recesses 9 are arranged in the covering layer 2 on either side of the position where the aircraft is disposed. Rails 10 are situated on the bottom of these recesses, and one or more folding platforms 11 can travel along the rails of each of the recesses 9, which platforms, in the folded-down position, have a height which approximately corresponds to the depth of the recesses 9. The folding platforms 11 are used to supply the aircraft with goods relating to cabin services and catering and/or for loading or unloading baggage and/or freight and/or containers.

In addition to a part of a drainage channel 4, each recess 9 is flanked by a longitudinal channel 12 which runs next to the longitudinal channel 6 and two transverse channels 13. Via the transverse channels 13, electric current is fed to a cable 14; an operator can connect the electric cable to a plug socket on the underside of the aircraft.

Conditioned air or oxygen can also be fed via a transverse channel 13 to a pit 16 which can be connected to the aircraft via a telescopic structure 17 and a hose 18. Fuel is pumped into the aircraft wings via hoses 19 and with the aid of a robot. The robot and the hoses are situated in a pit 20.

Compressed air for starting the aircraft can be supplied via a hose 21 and a telescopic line 22 which is located in a pit 23. Conditioned air can also be fed to the aircraft via the hose 24 and the telescopic line 25. A pit 26 is also arranged in the covering layer for this facility. A belt conveyor 27 may be fitted in one or both recesses 9 in order to convey supplied baggage via a booster conveyor 28 to a luggage hold of the aicraft. The number and location 10 of these belt conveyors depends on the type of aircraft.

Small pits 29 which can be closed off by a hinged cover are arranged in the covering layer on either side of the aircraft, in which pits 29 telescopic pylons 30 are accommodated, which move upwards after an aircraft has been parked in order, in this way, to provide vehicles with a better indication of the wing tips.

On either side of the tail, there are screens 31 which can be moved into an inclined position by means arranged in a pit 32, in order to shield operations on the apron from blast effects (airflows generated by aircraft engines) from aircraft on the apron taxiways (in the event of pushback and taxiing off).

The abovementioned folding platforms 11 for moving goods relating to cabin services and catering into the aircraft have a stand 34 on which a storage container 35 is positioned (Figure 3). This storage container is replaced when dealing with the next aircraft.

Underfloor heating elements 36 are arranged between the division between support layer 1 and covering layer 2.

As an alternative to a number of pits which are hollowed out at the most suitable location in the thickness of the covering layer in order to connect the conduits or other facilities to an aircraft, it is also possible to make use of a single common pontoon.

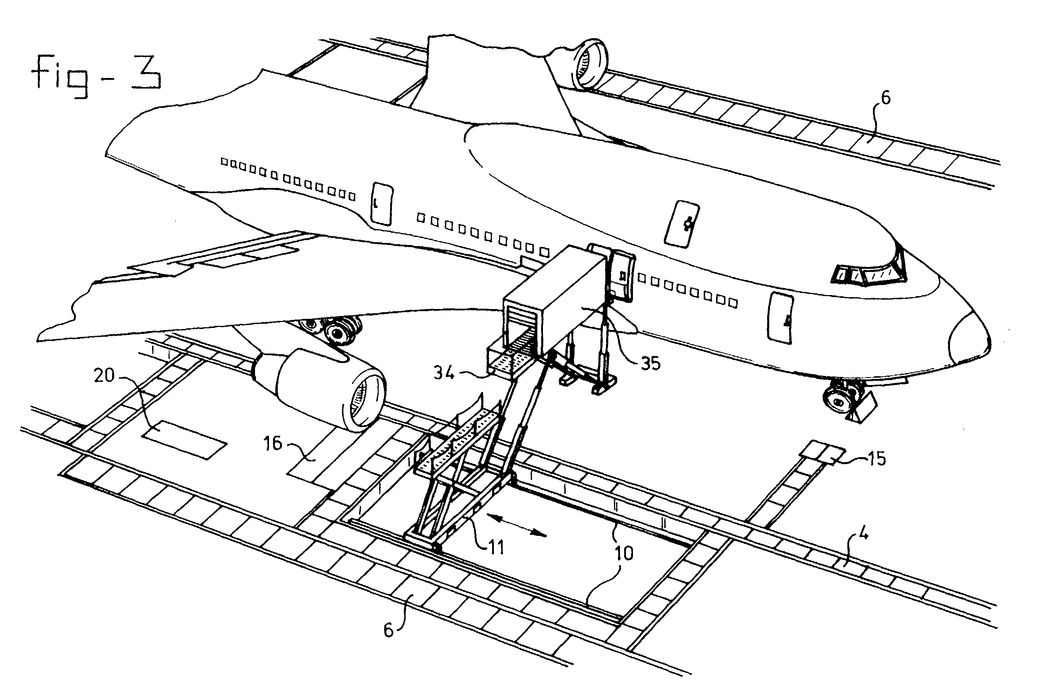

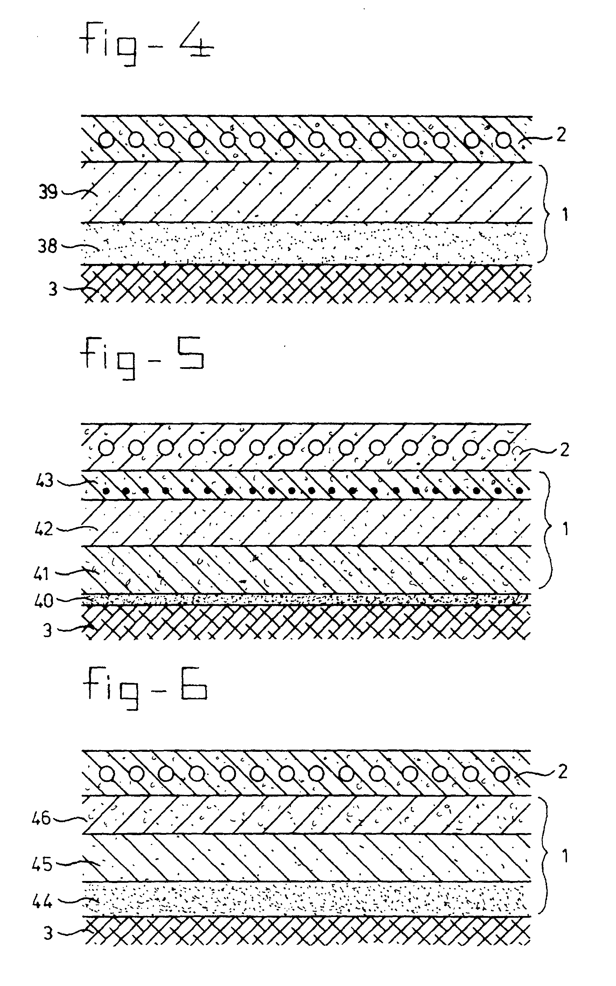

The design in accordance with Figure 4 relates to a completely new apron, the support layer of which consists of a layer of sand 38 (for example 35 cm thick) which rests on the ground 3 and a layer 39 which is applied thereon and consists of granules which are bound together by cement (for example 50 cm thick) and of which the additional covering layer 2 consists of unreinforced concrete (of a thickness, for example, of at most 50 cm). Directly beneath a parked plane, there are no facilities in the covering layer. Facilities are arranged in the rest of the covering layer, since loads in those areas are relatively low.

In the design in accordance with Figure 5, what is shown is an existing support layer 1 consisting of a thin layer of sand 40 (thickness, for example, 5 cm) resting on the ground 3, a layer of rolled concrete 41 (thickness, for example, 40 cm), a stabilizing layer 42 made from sand cement (thickness, for example, 33 cm) and a layer of prestressed concrete 43 (thickness, for example, 18 cm). A fresh covering layer 2 of unreinforced concrete is applied to this existing old support layer. The thickness of this fresh layer is at most 50 cm.

The design in accordance with Figure 6 also relates to an existing support layer 1 formed from a layer of sand 44 (thickness, for example, 35 cm) arranged on the ground 3, a cement-bound layer of granules 45 (thickness, for example, 50 cm), and a layer of unreinforced concrete 46 (thickness, for example, 38 cm). A fresh covering layer 2 is applied to this existing support layer.

In the designs in accordance with Figures 5 and 6, certain facilities may, to a limited extent, occur within the sphere of influence of a parked aircraft.

It is essential for the new design of apron that a number of facilities be accommodated in channels, pits, pontoons or the like in the thickness of the additional covering layer.

The covering layer could in principle also be designed as a waffle slab floor comprising hollow cubes in which the conduits and other facilities may be accommodated. In that case, no channels are required. The conduits may be placed in protective sleeves.

## Claims

1. Apron for parking and dealing with aircraft, comprising:
a hardened support layer which is arranged on the ground and is reinforced in such a manner that the dynamic and static loads which may occur when an aircraft travels across the apron and is standing on the apron are transmitted to the ground, **characterized in that** an additional covering layer is arranged on the said support layer, and **in that** conduits and/or channels and/or tunnels and/or pits are arranged in the said covering layer, within the thickness thereof, in order to supply fuel and/or electric current and/or drinking water and/or compressed air and/or preconditioned air or oxygen to a parked aircraft and/or to discharge rainwater and/or liquid or solid waste, for example leaked fuel, de-icing liquid, toilet waste.

2. Apron according to Claim 1, **characterized in that** the various conduits for electricity, compressed air, preconditioned air, drinking water, waste water and fuel are each connected to separate pits which are at an optimum position with respect to the aircraft to be dealt with.

3. Apron according to Claim 1, **characterized in that** the various conduits for electricity, compressed air, preconditioned air, drinking water, waste water and fuel are each connected to a common central pontoon.

4. Apron according to one of the preceding claims, **characterized in that** foldable platforms for loading and unloading containers, cabin services or catering products are incorporated in the covering layer.

5. Apron according to one of the preceding claims, **characterized in that** telescopically extendable pylons are incorporated in the covering layer.

6. Apron according to one of the preceding claims, **characterized in that** pits containing a fuel-feed robot are incorporated in the covering layer.

7. Apron according to one of the preceding claims, **characterized in that** a conveyor belt for supplying and removing loose baggage is accommodated in at least one recess in the covering layer.

8. Apron according to one of the preceding claims, **characterized in that** underfloor heating elements are incorporated in the separating surface between support layer and covering layer.

9. Apron according to one of the preceding claims, **characterized in that** pits with hingeable screens are incorporated in the covering layer for the purpose of diverting air displaced by the aircraft engines.

## Patentansprüche

1. Vorfeld für das Parken und Versorgen von Luftfahrzeugen, enthaltend:
eine gehärtete Tragschicht, die auf dem Boden angeordnet ist und in solcher Weise verstärkt ist, dass die dynamischen und statischen Belastungen, die auftreten können, wenn ein Luftfahrzeug über das Vorfeld rollt oder auf dem Vorfeld steht, auf den Boden übertragen werden, **dadurch gekennzeichnet, dass** eine zusätzliche Deckschicht auf der Tragschicht angeordnet ist und dass in der Deckschicht innerhalb ihrer Dicke Rohre und/oder Kanäle und/oder Tunnel und/oder Vertiefungen angeordnet sind, um Treibstoff und/oder Strom und/oder Trinkwasser und/oder Druckluft und/oder klimatisierte Luft oder Sauerstoff einem geparkten Luftfahrzeug zuzuführen und/oder Regenwasser und/oder flüssigen oder festen Abfall zu entsorgen, beispielsweise ausgelaufenen Treibstoff, Enteisungsflüssigkeit, Toilettenabwässer.

2. Vorfeld nach Anspruch 1 **dadurch gekennzeichnet, dass** die verschiedenen Leitungen für Elektrizität, Druckluft, klimatisierte Luft, Trinkwasser, Abwasser und Treibstoff je einer getrennten Vertiefung zugeführt sind, die an der optimalen Position bezüglich der Versorgung des Luftfahrzeugs angeordnet sind.

3. Vorfeld nach Anspruch 1 **dadurch gekennzeichnet, dass** die verschiedenen Leitungen für Elektrizität, Druckluft, klimatisierte Luft, Trinkwasser, Abwasser und Treibstoff je an einem gemeinsamen zentralen Ponton angeschlossen sind.

4. Vorfeld nach einem der vorhergehenden Ansprüche **dadurch gekennzeichnet, dass** faltbare Plattformen für das Laden und Entladen von Containern, Kabinenservices oder Küchenprodukten in der Deckschicht eingebaut sind.

5. Vorfeld nach einem der vorhergehenden Ansprüche **dadurch gekennzeichnet, dass** teleskopartig ausziehbare Masten in der Deckschicht eingebaut sind.

6. Vorfeld nach einem der vorhergehenden Ansprüche **dadurch gekennzeichnet, dass** Vertiefungen, die ein Treibstoff-Zuleitungsroboter enthalten, in der Deckschicht eingebaut sind.

7. Vorfeld nach einem der vorhergehenden Ansprüche **dadurch gekennzeichnet, dass** ein Förderband zum Zuführen und Entfernen loser Gepäckstücke in wenigstens einer Ausnehmung der Deckschicht angeordnet ist.

8. Vorfeld nach einem der vorhergehenden Ansprüche **dadurch gekennzeichnet, dass** Unterflur-Heizelemente in der Trennfläche zwischen Tragschicht und Deckschicht angeordnet sind.

9. Vorfeld nach einem der vorhergehenden Ansprüche, **dadurch gekennzeichnet, dass** Vertiefungen mit schwenkbaren Schirmen in der Deckschicht angeordnet sind, um Luft abzulenken, die von den Motoren des Luftfahrzeugs verdrängt wird.

## Revendications

1. Aire d'évolution pour le stationnement et la prise en charge d'un avion, comportant :
une couche de support durcie qui est disposée sur le sol et est renforcée d'une manière telle que les charges dynamiques et statiques qui peuvent apparaître lorsqu'un avion se déplace sur l'aire d'évolution et s'arrête sur l'aire d'évolution sont transmises au sol, **caractérisée, en ce qu'**une couche de revêtement additionnelle est disposée sur ladite couche de support, et **en ce que** des conduites et/ou des canaux et/ou des tunnels et/ou des fosses sont prévus dans ladite couche de revêtement, dans l'épaisseur de celle-ci, afin de délivrer du carburant et/ou du courant électrique et/ou de l'eau potable et/ou de l'air comprimé et/ou de l'air pré-conditionné ou de l'oxygène à un avion en stationnement et/ou afin d'évacuer de l'eau de pluie et/ou des déchets solides ou liquides, par exemple du carburant qui a fui, du liquide de dégivrage, des déchets de toilettes.

2. Aire d'évolution selon la revendication 1, **caractérisée en ce que** les différentes conduites pour l'électricité, l'air comprimé, l'air pré-conditionné, l'eau potable, les eaux usées et le carburant sont reliées chacune à des fosses séparées qui sont dans une position optimum par rapport à l'avion devant être pris en charge.

3. Aire d'évolution selon la revendication 1, **caractérisée en ce que** les différentes conduites pour l'électricité, l'air comprimé, l'air pré-conditionné, l'eau potable, les eaux usées et le carburant sont reliées chacune à un ponton central commun.

4. Aire d'évolution selon l'une quelconque des revendications précédentes, **caractérisée en ce que** des plate-formes escamotables pour le chargement et le déchargement de conteneurs, de services de cabine ou de produits de cuisine sont incorporées dans la couche de revêtement.

5. Aire d'évolution selon l'une quelconque des revendications précédentes, **caractérisée en ce que** des pylônes extensibles de manière télescopique sont incorporés dans la couche de revêtement.

6. Aire d'évolution selon l'une quelconque des revendications précédentes, **caractérisée en ce que** des fosses contenant un robot d'alimentation en carburant sont incorporées dans la couche de revêtement.

7. Aire d'évolution selon l'une quelconque des revendications précédentes, **caractérisée en ce qu'**une bande transporteuse destinée à délivrer et évacuer des bagages libres est logée dans au moins un renfoncement dans la couche de revêtement.

8. Aire d'évolution selon l'une quelconque des revendications précédentes, **caractérisée en ce que** des éléments de chauffage sous le sol sont incorporés dans la surface de séparation entre la couche de support et la couche de revêtement.

9. Aire d'évolution selon l'une; quelconque des revendications précédentes, **caractérisée en ce que** des fosses avec des écrans articulés sont incorporées dans la couche de revêtement dans le but de dévier l'air déplacé par les moteurs de l'avion.
